# EUROPEAN PATENT SPECIFICATION

(11) **EP 2 402 090 B1**
(45) Date of publication and mention of the grant of the patent: **11.05.2016**
(21) Application number: 11171913.4
(22) Date of filing: 29.06.2011
(51) Int. Cl.: B05B 7/24, B05B 7/14, A01M 7/00

(54) **Improvement of a knapsack atomizer**
Verbesserung eines Rückensprühgeräts
Améliorations d'un pulvérisateur à portage dorsal

(30) Priority: 29.06.2010 BR MU9001876 U
(43) Date of publication of application: 04.01.2012
(73) Proprietor: Guarany Indústria e Comércio Ltda., 13308-200 Itú Sao Paulo (BR)
(72) Inventor: Fleury Bellandi, Carlos Alberto, 13306-460 Itú - SP - CEP (BR)
(74) Representative: Stöckeler, Ferdinand

(56) References cited:
- WO-A2-2006/087608
- JP-U- H0 324 878
- JP-U- H0 544 249
- JP-U- S63 160 963
- US-A- 3 199 785

## Description

The present invention refers to an improvement in the chemicals sediment solidification directly in the motorized costal atomizer.

The chemicals sediment solidification is currently performed by means of a component provided in metal or other material.

Such component increases the assembly weight, hampering its user loading, as well as its final cost.

Motorized costal atomizers having a reservoir are for example described in JP S63 160963 U, JP H05 44249 U, and JP H03 24878 U

Each of these documents describes a reservoir according to the preamble of claim 1.

It is an object of the invention to eliminate the component made of metal or other material for fixing fix up the assembly, thereby improving and reducing weight, ameliorating design and facilitating equipment manufacturing.

This object is achieved by the reservoir of claim 1.

### Brief description of the drawings

In the following, the present invention will be described in a clearly and concisely manner based on an example depicted in the drawings. The drawings show:
Fig. 1 - a rear perspective view of the costal atomizer object of the present invention;

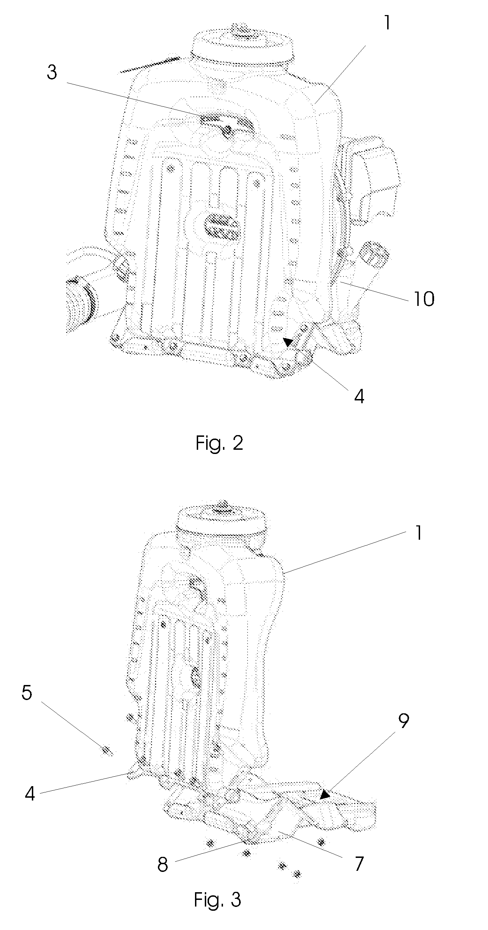

Fig. 2 - a second rear perspective view of the costal atomizer object of the present invention;
Fig. 3 - an exploded view of the costal atomizer object of the present invention.

### Detailed description of the drawings and invention

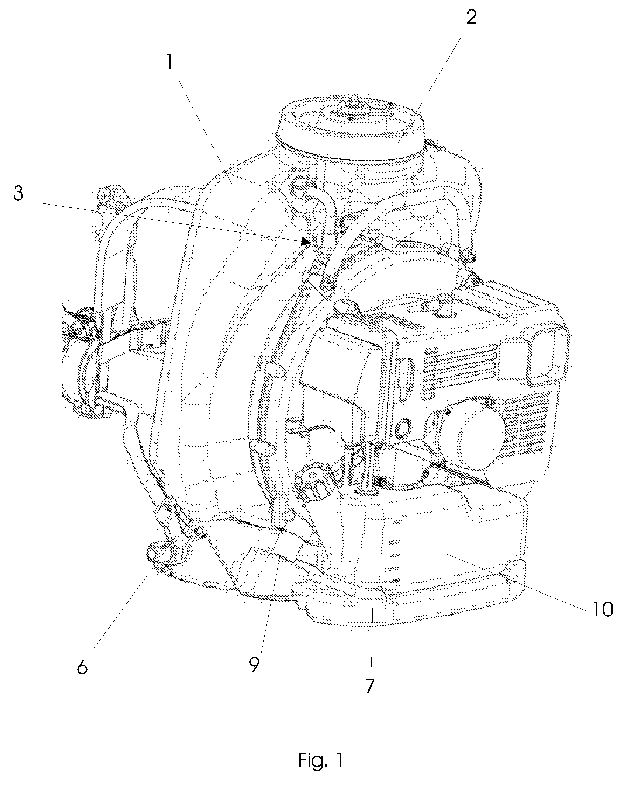

As can be seen from Fig. 1, an improvement in the chemicals sediment solidification with a base of the motorized costal atomizer, object of the invention, comprises a reservoir made in plastic (1) that has a filling nozzle in its top end (2).

The reservoir has a geometry in its central region in which there is tank side walls junction, generating a reinforcement where is the top solidification point of the motor fan assembly (3).

Additionally, in its inner end, edges (4) are provided with holes for housing attachment screws (5) and seats to receive bearing belt (6).

Said edges (4) are positioned in a determined angle related to vertical aiming to maximize the structural stiffness.

One base (7), there are second edges (8) in its front edge (8) with a geometry that allows a perfect fit with the edges (4) of the reservoir (1).

The base side (7) is provided with two holes to receive the bottom attachment of the motor fan assembly (9), and its rear portion presents suitable structure for fuel tank application (10).

Having described an example of the preferred embodiment, it should be understood that the scope of the present invention comprises other possible variations, being limited solely by the content of the claim appended thereto, including the possible equivalents therein.

## Claims

1. A plastic reservoir (1) for a motorized costal atomizer having a motor fan assembly (3) and a fuel tank (10), the plastic reservoir (1) comprising:
- a filling nozzle (2) at a top end of the reservoir (1);
- first edges (4) provided at the bottom end of the reservoir (1), the first edges (4) having holes for receiving attachment screws (5) and seats for receiving a bearing belt (6), wherein the first edges (4) are positioned at a determined angle with respect to the vertical; and
- a base (7) having second edges at its front end (8) with a geometry to fit with the first edges (4), the base side (7) being provided with two holes for receiving a bottom attachment (9) of the motor fan assembly (3), and having a rear portion for receiving the fuel tank (10)
the plastic reservoir being **characterized in that** it further comprises:
- a top attachment point to which a top point of the motor fan assembly (3) is attachable, the top attachment point being defined by a geometry in the central region of the reservoir (1) in which the reservoir side walls have a junction.

## Patentansprüche

1. Ein Kunststoffreservoir (1) für ein motorisch angetriebenes Rückensprühgerät mit einer Motorgebläseanordnung (3) und einem Treibstofftank (10), wobei das Kunststoffreservoir (1) folgende Merkmale aufweist:
- einen Füllstützen (2) an einem oberen Ende des Reservoirs (1);
- erste Ränder (4), die an dem unteren Ende des Reservoirs (1) vorgesehen sind, wobei die ersten Ränder (4) Löcher zum Aufnehmen von Befestigungsschrauben (5) und Auflagen zum Aufnehmen eines Trageriemens (6) aufweisen, wobei die ersten Ränder (4) in einem vorbestimmten Winkel in Bezug auf die Vertikale positioniert sind; und
- eine Basis (7), die zweite Ränder an dem vorderen Ende (8) derselben mit einer an die ersten Ränder (4) angepassten Geometrie aufweist, wobei die Basisseite (7) mit zwei Löchern zum Aufnehmen einer unteren Befestigung (9) der Motorgebläseanordnung (3) versehen ist, und einen hinteren Abschnitt für eine Aufnahme des Treibstofftanks (10) aufweist,
wobei das Kunststoffreservoir **dadurch gekennzeichnet ist, dass** es ferner folgendes Merkmal aufweist:
- einen oberen Befestigungspunkt, an dem ein oberer Punkt der Motorgebläseanordnung (3) befestigbar ist, wobei der obere Befestigungspunkt durch eine Geometrie in dem Mittelbereich des Reservoirs (1) definiert ist, in dem die Reservoirseitenwände einen Anschluss aufweisen.

## Revendications

1. Réservoir en matière plastique (1) pour un pulvérisateur motorisé à portage dorsal présentant un ensemble de moto-ventilateur (3) et un réservoir de carburant (10), le réservoir en matière plastique (1) comprenant:
- une buse de remplissage (2) à une extrémité supérieure du réservoir (1);
- des premiers bords (4) prévus à l'extrémité inférieure du réservoir (1), les premiers bords (4) présentant des trous pour recevoir des vis de fixation (5) et des sièges pour recevoir une courroie de portage (6), où les premiers bords (4) sont positionnés suivant un angle déterminé par rapport à la verticale; et
- une base (7) présentant des deuxièmes bords à son extrémité avant (8) avec une géométrie pour s'emboîter avec les premiers bords (4), le côté de base (7) étant pourvu de deux trous destinés à recevoir un moyen de fixation inférieur (9) de l'ensemble de moto-ventilateur (3), et présentant une partie arrière destinée à recevoir le réservoir de carburant (10),
le réservoir en matière plastique étant **caractérisé par le fait qu'**il comprend par ailleurs:
- un point de fixation supérieur auquel peut être fixé un point supérieur de l'ensemble de moto-ventilateur (3), le point de fixation supérieur étant défini par une géométrie dans la région centrale du réservoir (1) dans laquelle les parois latérales du réservoir présentent une jonction.
